Europäisches Patentamt

(19) European Patent Office

Office européen des brevets

(11) EP 1 433 767 A1

(12) EUROPEAN PATENT APPLICATION
published in accordance with Art. 158(3) EPC

(43) Date of publication:
30.06.2004 Bulletin 2004/27

(51) Int Cl.⁷: $C04B\ 38/00$, $B32B\ 18/00$, $H01M\ 8/02$, $H01M\ 8/12$

(21) Application number: 02777793.7

(22) Date of filing: 26.09.2002

(86) International application number:
PCT/JP2002/009913

(87) International publication number:
WO 2003/027041 (03.04.2003 Gazette 2003/14)

(84) Designated Contracting States:
AT BE BG CH CY CZ DE DK EE ES FI FR GB GR IE IT LI LU MC NL PT SE SK TR

(30) Priority: 26.09.2001 JP 2001292882
27.09.2001 JP 2001297325

(71) Applicant: NGK INSULATORS, LTD.
Nagoya-City, Aichi Prefecture 467-8530 (JP)

(72) Inventors:
• ITO, Shigenori
  Nagoya-city, Aichi 467-8530 (JP)

• OKUMURA, Kiyoshi
  Nagoya-city, Aichi 467-8530 (JP)
• SAKAI, Hiroaki
  Nagoya-city, Aichi 467-8530 (JP)

(74) Representative: Paget, Hugh Charles Edward et al
Mewburn Ellis LLP
York House
23 Kingsway
London WC2B 6HP (GB)

(54) **LAMINATED CERAMIC SINTERED COMPACT, METHOD FOR PRODUCING LAMINATED CERAMIC SINTERED COMPACT, ELECTROCHEMICAL CELL, ELECTROCONDUCTIVE JOINING MEMBER FOR ELECTROCHEMICAL CELL, AND ELECTROCHEMICAL DEVICE**

(57)    A laminated sintered body is produced having a ceramic porous body 8 having a thickness of 300 μm or larger and a ceramic dense body 9 having a thickness of 25 μm or smaller. A green body 5 for the porous body and a green body 3 for the dense body is laminated to obtain a laminate, which is then subjected to pressure molding by cold isostatic pressing to obtain a pressure molded body 6. The pressure molded body 6 is sintered to obtain a laminated sintered body. Alternatively, it is provided a laminated sintered body has a ceramic porous body having a thickness of 300 μm or larger and a ceramic dense body having a thickness of 25 μm or smaller. By reducing the leakage rate of helium gas of the laminated sintered body to $10^{-6}$ Pa·m³/s or lower, the operational efficiency of the cell can be improved, and the deterioration of the cell can be prevented to improve an output after the cell is subjected to initiation and termination cycle test of operation.

Fig.1

**Description**

BACKGROUND OF THE INVENTION

1. Field of the Invention

The present invention relates to a ceramic laminated sintered body, a method of producing the same, an electrochemical cell, a conductive interconnector for electrochemical cell and an electrochemical device.

2. Related Art Statement

Solid oxide fuel cells are generally divided into two categories; planar and tubular types. In planar type solid oxide fuel cells, a power generating stack is formed by alternately laying so-called separators and power generating layers. In Japanese patent publication No. 5-54897A, an anode and a cathode are respectively formed on the sides of solid electrolyte film to prepare a power generation layer. Then a thin film containing ceramic powder and an organic binder is sandwiched between this power generation layer and an interconnector to obtain an assembly, which is then heat treated so that the power generation layer and the interconnector are joined with each other.

The inventors have studied to produce an SOFC operating at a relatively low temperature, for example, at about 800 °C. In such kind of SOFC has, for example, thick fuel and air electrodes are provided on both surfaces of a thin film of 3 mole percent yttria stabilized zirconia, respectively. The thin film of zirconia has an extremely small thickness of, for example, about 10 µm. It is thus required that the solid electrolyte film has excellent air-tightness. In prior arts, however, it has not been sufficiently studied a technique for laminating and then co-sintering the thin solid electrolyte film having high air-tightness with the ceramic electrode having a large thickness and high porosity.

So called absorption dipping method is known as the technique. According to the method, slurry for zirconia is absorbed and adhered onto the surface of an air electrode and subjected to co-sintering.

It is further known to sinter a green sheet of a solid electrolyte to produce a dense film of the solid electrolyte (Japanese patent No. 3183906). It is described that the film has a thickness of 100 µm to 1mm and a transmittance of nitrogen gas of zero.

It is further known to form an yttria stabilized zirconia film (solid electrolyte film) by ion plating on an air electrode made of a porous sintered body (Japanese patent publication 2000- 62077A). It is described that the film has a leakage rate of helium gas of $1 \times 10^{-7}$ to $1 \times 10^{-9}$ atm · cc/s.

It is also known a method of forming an yttria stabilized zirconia film on a polymer sheet, laminating the polymer sheet on a green sheet of an electrode, and sintering the green sheet (Japanese patent No. 3220314). The polymer sheet is disappeared during the sintering step.

SUMMARY OF THE INVENTION

It is, however, found that the zirconia film obtained by absorption dipping method has many pores and defects therein when observed microscopically. It is required to reduce the thickness of the solid electrolyte film and to maintain the air tightness of the solid electrolyte at the same time, for improving the generation efficiency of the SOFC. A manufacturing technique satisfying the above requirements has been demanded. According to absorption dipping method, it is difficult to control the thickness of the zirconia film at a uniform value to result in local deviation of the thickness. The deviation of thickness of the zirconia film results in local deviation in the performance of generation of the SOFC so that the overall generation efficiency is lowered.

The sheet sintering method described in Japanese patent No. 3183906 may provide a dense solid electrolyte film having a thickness as small as about 100 µm. The cell having a solid electrolyte film having a thickness of 100 µm to 1 mm exhibits, however, a limit in improving the efficiency of the cell. It is difficult to produce a solid electrolyte film having a thickness of, for example, about 25 µm.

Although the he above method of forming a solid electrolyte film by ion plating is applicable for forming a film with a small area, it is difficult and impractical to form a film with an area sufficiently large for practical applications on the viewpoint of an actual manufacturing process.

Further in a process for forming a solid electrolyte film by printing on a substrate, the resulting film has many defects, for example, due to the effects of irregularity on the surface of the substrate. It is thus difficult to obtain a dense film having a large area.

According to the method described in Japanese patent No. 3220314, the polymer sheet is disappeared at a temperature lower than the starting temperature of the sintering of the green sheet. The green sheet does not have a sufficiently high strength so that defects may be easily induced in the film.

As described above, it is desired a dense solid electrolyte film having a large area and a thickness as small as possible for improving the efficiency of an electrochemical cell. It is, however, difficult to reduce the thickness and porosity of a solid electrolyte film on the viewpoint of an actual manufacturing process as described above. It has thus not been studied how the efficiency of an electrochemical cell is actually improved by reducing the thickness of the solid electrolyte film.

The inventors have successfully produced a relatively dense solid electrolyte film having a large area and an electrochemical cell, such as a solid oxide fuel cell using the film. They have further performed a test of power generation for the cell as described later. It is thus found that the effect of the air tightness of the solid electrolyte film on the generation efficiency is relatively small so that a high degree of air tightness may not be necessary for further improving the efficiency. Based on the findings, it should have been relatively easy to increase the area and reduce the thickness of the solid electrolyte film at the same time.

The inventors have further studied the technique and found the followings. That is, the air tightness of the solid electrolyte film having a large area and small thickness is reduced to a value lower than a specific value, it is proved that the cell is deteriorated to result in a considerable reduction of generation efficiency after repeating activation and termination of the operation of the cell.

An object of a first aspect of the present invention is to apply a laminated sintered body of ceramic porous and dense bodies on an electrochemical cell, and to improve the operational efficiency of the cell and to prevent the deterioration of the cell after the activation and termination of operation is repeated so as to prevent the reduction of the operational efficiency of the cell.

An object of a second aspect of the present invention is to produce a laminated sintered body of ceramic porous and dense bodies on an electrochemical cell, and to reduce defects and pores in the dense body and to produce the dense body having a constant thickness.

When a plurality of unit cells and separators are laminated in turns to produce a stack (stacked cells), a material for the separator is exposed to fuel and oxidizing gases. The material for the separator should be resistive against the gases at an operational temperature of the cell of, for example, 800 to 1000 °C, and should have a specific volume resistivity as low as possible at the operational temperature of the cell. Materials satisfying the above requirements are relatively rare and lanthanum chromite is frequently used until now.

When many planar unit cells and separators are laminated to produce a stacked cell, it is required that each of the unit cell and separator is a self-standing structural body without the need of providing another structural body for supporting. It is considered that the separator is made of a metal for making a self-standing separator. It is found that an appropriate metal is rare which is not oxidized over a long time under air at a high temperature of, for example, 1000 °C. When a separator made of nickel or a nickel based alloy resistive against a fuel gas is used, nickel or nickel based alloy is gradually oxidized over a long time period so as to reduce the conductivity of the separator and generation efficiency.

On the other hand, when a separator is made of lanthanum chromite having resistance against fuel and oxidizing gases at a temperature of 800 to 1000 °C, it is necessary to increase the thickness of the separator for providing a self standing separator. Lanthanum chromite, however, has a relatively large electrical resistance, so that a loss of voltage is increased due to an internal resistance in the separator to lower the generation output. Particularly when any separators and unit cells are laminated, the effects of the voltage loss is considerable.

An object of a third aspect of the present invention is, in an electrochemical device produced by laminating electrochemical cells and conductive interconnectors for connecting the cells in turns, to provide a self standing interconnector, to prevent reduction of operational efficiency due to oxidation and corrosion of the interconnector and to reduce an internal resistance in the interconnector to reduce the voltage loss.

The first aspect of the present invention provides a laminated sintered body having a ceramic porous body having a thickness of 300 $\mu$m or larger and a ceramic dense body having a thickness of 25 $\mu$m or smaller. The laminated sintered body has a helium leakage rate of $10^{-6}$ Pa $\cdot$ m$^3$/s or lower.

The inventors have produced a thin and dense film, such as a solid electrolyte film, having a thickness of 25 $\mu$m or smaller and a large surface area on a ceramic porous body and measured the operational efficiency of a cell, such as the generation output of an SOFC, as described later. When the thickness of the solid electrolyte film is lowered and the surface area is increased, the air-tightness of the film inevitably tends to be reduced and the helium leakage rate elevated. It is very difficult to prevent the tendency due to the limit of actual manufacturing processes, as described above.

The inventors thus have variously changed the helium leakage rate and studied the relationship between the rate and generation output. Such test of the relationship has not been clearly studied yet. This is because it has been difficult to reduce or control the helium leakage rate of a solid electrolyte film having a large surface area and a thickness of 25 $\mu$m or smaller at the same time due to the limit of production. The inventors have enabled such study of the relationship by utilizing the production method according to the second aspect of the present invention described later. It is finally found that the influence of an increase of the helium leakage rate of a solid electrolyte film on the generation output is not considerable.

That is, although the helium leakage rate is elevated as the solid electrolyte film is thinner and the surface area is larger, a reduction in the generation output proved to be not considerable considering the increase of the helium leakage rate. The generation output can be thus improved by lowering the thickness and increasing the surface area of the solid electrolyte film. It is thus considered that the reduction of generation output due to an increase of the helium leakage rate can be easily compensated.

The inventors have further investigated, and found the followings. That is, when the helium leakage rate of the solid electrolyte film exceeds a specific value, the operational efficiency of the cell may be reduced after the initiation and termination of the operation of the cell is repeated. For example, the generation output of an SOFC may be considerably lowered compared with an initial output. Since the initial output is not so lowered in this case, the reduction of the output is not correlated with the increase of gas leak during the generation process.

The inventors have further investigated and found the followings. For example, when the operation of an SOFC is terminated, the supply of a fuel gas is terminated, and an inert gas such as nitrogen and argon, or an inert gas containing a small amount of a fuel for imparting weak reductive property is supplied instead of the terminated fuel gas. If a trace amount of an oxidizing gas is leaked to the side of a fuel electrode, a partial pressure of oxygen in the side of the fuel electrode is elevated to result in the deterioration of the fuel electrode. For example, nickel component in the fuel electrode may be oxidized.

A high concentration of fuel gas is supplied to the fuel electrode during the subsequent operation, the once oxidized fuel electrode, for example nickel oxide component contained therein, should have been reduced again. It has been considered that the fuel electrode can be fully recovered. It is found that, in actual operation, the microscopic state of the fuel electrode is changed after the oxidation and reduction processes of the fuel electrode are repeated, so that desirable microstructure as the fuel electrode is gradually lost.

The inventors have studied the helium leakage rate of a dense thin film of a laminated sintered body constituting a cell, based on the above discovery, for preventing the deterioration of the microstructure of the cell after the initiation and termination cycles of the cell are repeated. It is finally found that the deterioration of the cell after the initiation and termination cycles are repeated can be prevented, by lowering the helium leakage rate to a value of $10^{-6}$ $Pa \cdot m^3/s$ or lower.

The helium leakage rate of the laminated sintered body may preferably be $10^{-7}$ $Pa \cdot m^3/s$ or lower on the viewpoint.

Further, the area of the laminated sintered body may preferably be $60 \ cm^2$ or larger for improving the operational efficiency of the cell.

The laminated sintered body of the first aspect of the present invention may be applied to a solid electrolyte film and electrodes constituting a cell. Alternatively, the laminated sintered body may be applied as an interconnector for connecting cells. The embodiments will be described later.

A second aspect of the present invention provides a method of producing a laminated sintered body having a ceramic porous body having a thickness of 300 μm or larger and a ceramic dense body having a thickness of 25 μm or smaller. According to the method, a green body for the porous body and a green body for the dense body are laminated, and subjected to pressure molding by cold isostatic pressing to obtain a pressure molded body, which is then sintered to obtain the laminated sintered body.

For producing a laminated body having a ceramic porous body having a larger thickness and a thin ceramic dense body, the green bodies for the dense and porous bodies are laminated and subjected to pressure molding by cold isostatic pressing, as described above. It is thus possible to reduce the thickness of the dense body and to prevent defects and pores in the dense body after the sintering process. Further, the thickness of the dense body can be made uniform as a whole according to the following mechanism.

According to the second aspect of the present invention, in producing the laminated sintered body having ceramic porous and dense bodies, it is possible to reduce defects and pores in the dense body and to make the thickness of the dense body constant.

Further, according to the above method, it becomes possible to produce the laminated sintered body, according to the first aspect of the present invention, having a large area, a small thickness and low helium leakage rate.

A third aspect of the present invention provides a conductive interconnector for connecting a plurality of electrochemical cells. The cell has a first electrode contacting a first gas, a second electrode contacting a second gas, and a solid electrolyte film provided between the first and second electrodes. The conductive interconnector has a ceramic substrate made of a material having resistance against the first gas at an operational temperature of the electrochemical cell, and a ceramic film formed on the substrate and made of a material having resistance against the second gas at an operational temperature of the cell.

The third aspect of the present invention further provides an electrochemical device having a plurality of electrochemical cells and an interconnector connecting the cells. The cell has a first electrode contacting a first gas, a second electrode contacting a second gas, and a solid electrolyte film provided between the first and second electrodes. The conductive interconnector has a ceramic substrate made of a material having resistance against the first gas at an operational temperature of the electrochemical cell, and a ceramic film formed on the substrate and made of a material having resistance against the second gas at an operational temperature of the cell.

A material for a prior ceramic interconnector has been selected from materials having (1) a resistance against the first gas and (2) resistance against the second gas, and the material should have a specific volume resistivity as low as possible. However, such material resistive against the first and second gases at an operational temperature of the cell is relatively few, so that only a material exhibiting a relatively high specific volume resistivity can be utilized.

According to the third aspect of the present invention, it is possible to impart a structural strength required for self standing on an interconnector by using the ceramic substrate. The material of the ceramic substrate is selected from materials having resistance against the first gas, and the material of the ceramic film is selected among materials having resistance against the second gas. It is thus possible to prevent the oxidation and corrosion of the conductive interconnector, and to select an appropriate material for the thicker ceramic substrate and for imparting the structural strength among materials having a low specific volume resistivity. It is thus possible to prevent an increase of an internal resistance in the conductive interconnector.

According to the third aspect of the present invention, the conductive interconnector can be a self standing structure, to prevent the reduction of operational efficiency due to the oxidation and corrosion of the interconnector and to reduce the internal resistance in the interconnector as possible so that the loss of electric current can be lowered.

BRIEF DESCRIPTION OF THE DRAWINGS

Figs. 1(a). 1(b) and 1(c) are diagrams schematically showing a manufacturing process of a laminated sintered body 7 according to the first and second aspects of the present invention.

Figs. 2 (a) and 2(b) relate to another embodiment of the first and second aspects of the present invention, in which green bodies 3A and 3B are provided on both main faces of a green body 5 for a porous body and subjected to cold isostatic pressing to obtain a pressure molded body 6A.

Fig. 3 (a) shows a laminated sintered body 7 and a green body 10 for a second electrode formed thereon.

Fig. 3 (b) shows a laminated sintered body 7 and a second electrode 11 formed thereon.

Fig. 4 is a front view schematically showing a conductive interconnector 21 according to one embodiment of the third aspect of the present invention.

Fig. 5 is a front view schematically showing one example of an electrochemical cell 27.

Fig. 6 is a front view schematically showing a part of an electrochemical cell 31 according to one embodiment of the third aspect of the present invention.

Fig. 7(a) shows a pressure molded body 37 in a production example of a sample according to the third aspect of the present invention.

Fig. 7(b) shows a sample of a conductive interconnector 41 according to a comparative example.

Fig. 8 is a photograph taken by a microscope of a ceramic structure of an electrochemical cell according to one embodiment of the first and second aspects of the present invention.

Fig. 9 is a photograph taken by a microscope of a ceramic structure of an electrochemical cell according to one embodiment of a comparative example.

Fig. 10 is a schematic diagram for explaining a method of a generation test.

BEST MODES FOR CARRYING OUT THE INVENTION

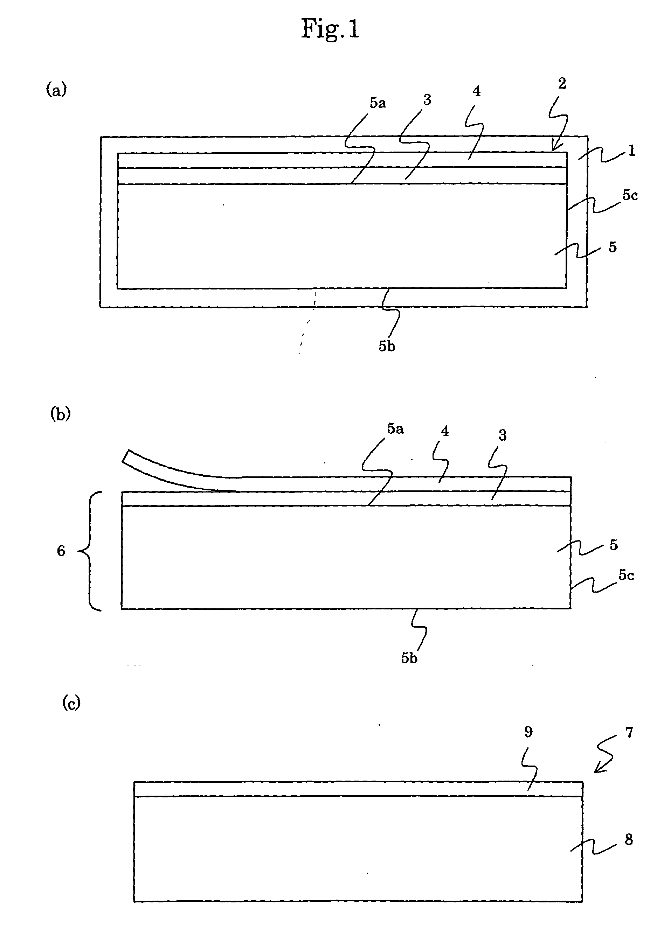

Figs. 1(a) to 1(c) show a production process of a laminated sintered body according to one embodiment of the second aspect of the present invention. As shown in Fig. 1(a), a green body 3 for a dense body is laminated on a main face 5a of a green body 5 for a dense body. Preferably, a resin sheet 4 is laminated on and in direct contact with the green body 3 for dense body. 5b represents a main face and 5c represents a side face of the green body 5. A laminated body 2 is composed of the green body 5 for porous body, green body 3 for dense body and resin sheet 4. The laminated body 2 is covered with a film 1 over the whole surface and then subjected to cold isostatic pressing. It is thus possible to apply a uniform pressure over the whole surface of the laminated body 2.

The film 1 is then peeled from the thus obtained pressure molded body to obtain a laminated body shown in Fig. 1(b). The resin sheet 4 is peeled from the pressure molded body 6, which is then sintered to obtain a laminated sintered body 7 shown in Fig. 1(c). The laminated sintered body 7 has a porous body 8, and a dense body 9 laminated on the porous body 8.

According to the second aspect of the present invention, the green body 5 for porous body and green body 3 for dense body are laminated and then subjected to pressure molding by cold isostatic pressing to integrate them. The thus obtained pressured molded body 6 is then sintered. The green body 5 for porous body has many open pores therein, so that substantial microscopic irregularity is present on the surface 5a of the green body 5 for porous body. According to cold isostatic pressing, however, a pressure applied on the surface of the green body 3 for porous body is substantially constant over the whole surface of the green body 3. When the irregularity is present on the surface 5a of the green body 5, the surface of the green body 3 is deformed microscopically along the irregularity so that the irregularity is transferred onto the surface of the green body 3. The thickness of the green body 3 can be thus made constant.

If the green body 3 for dense body is printed on the green body 5 for porous body, air bubbles may be easily absorbed into the green body 3 during the printing to result in many defects. Moreover, although the surface of the green body 3 can be made flat, the surface of the underlying green body 5 has irregularity in this case. The thickness' of the green body 3 is inevitably deviated locally. Such kinds of problems occur when uniaxial press molding process is applied.

According to the second aspect of the present invention, the green body 3 for dense body is thin, and a high pressure is applied over the whole surface of the green body 3, so as to prevent the occurrence of air bubbles due to the printing or absorption of air. The pores and defects in the dense body can be thus prevented.

Further, according to the second aspect of the present invention, the thickness of the dense body 9 is made 25 μm or smaller and the thickness of the porous body 8 is made 300 μm or larger. The thin dense body is thus provided on the thick porous body and subjected to cold isostatic pressing to prevent the peeling of the green body for dense body from the green body for porous body due to a difference of thermal shrinkage during the sintering process of the green bodies.

In a field of an SOFC, a Japanese patent publication 8- 319181A discloses a technique for producing a laminated sintered body of a separator and air electrode. According to the publication, a joining agent is applied between green bodies for separator and air electrode, which is laminated to obtain a laminated and molded body. A predetermined number of through holes are provided in the molded body. The outer surface of the molded body and the inner wall surface facing the through holes are covered with a rubber material. The molded body is then subjected to cold isostatic pressing to obtain a pressure molded body, which is then sintered. According to the technique, the molded body is pressed from the side of the inner wall surface facing the through hole by cold isostatic pressing to improve the adhesion of the separator and air electrode and thus to prevent the peeling of them due to a difference of thermal shrinkage during the sintering. The technique is not for producing the dense and thin film onto the thick and porous body as the present invention.

According to a preferred embodiment of the first and second aspects of the present invention, the relative density of the dense body is 90 percent or higher, more preferably be 95 percent or higher and may be 100 percent at maximum. Further in a preferred embodiment, the relative density of the porous body is 90 percent or lower. The relative density of the porous body may preferably be 40 percent or higher for improving the strength. Further in a preferred embodiment, a difference between the relative densities of the porous and dense bodies is 20 percent or more.

A thickness of 300 μm or more for the porous body is sufficiently large for the purpose of the first and second aspects of the present invention. The thickness of the porous body may preferably be larger and more preferably be 500 μm or larger. The upper limit of the thickness of the porous body is not particularly defined and may be 5 mm or smaller for example. Although a thickness of 25 μm or smaller for the dense body is sufficient for the purpose of the first and second aspects of the present invention, the thickness may preferably be 15 μm or smaller. The thickness may preferably be 5 μm or larger for preserving the air-tightness.

In a preferred embodiment, a resin sheet is laminated on the green body for dense body and then subjected to cold isostatic pressing for press molding. It is thus possible to prevent the adhesion of the green body 3 for dense body onto the film 1 and thus to facilitate the removal of the pressure molded body 6. Further, the resin sheet 4 has flexibility so that the sheet 4 does not prevent the above mechanism of making the thickness of the green body 3 constant.

A material for the resin sheet is not particularly limited, and may preferably be polyethylene terephthalate.

The thickness of the resin sheet is not particularly limited, and may preferably be 200 μm or smaller for applying a pressure uniformly onto the surface of the green body for dense body. On the other hand, if the resin sheet is broken, the thickness of the green body for dense body may be deviated. The thickness of the resin sheet may preferably be 50 μm or larger for preventing the above problems.

According to a preferred embodiment of the second aspect of the present invention, the green body for porous body and green body for dense body are subjected to cold isostatic pressing for pressure molding without providing a joining agent therebetween. It is possible to produce a strongly joined body without the need of such joining agent according to the present invention. Such joining agent present along the interface might be a cause for introducing pores and defects in the dense body depending on the materials used. It is thus advantageous to prevent the use of the joining agent. The second aspect of the present invention does not exclude embodiments using the joining agent.

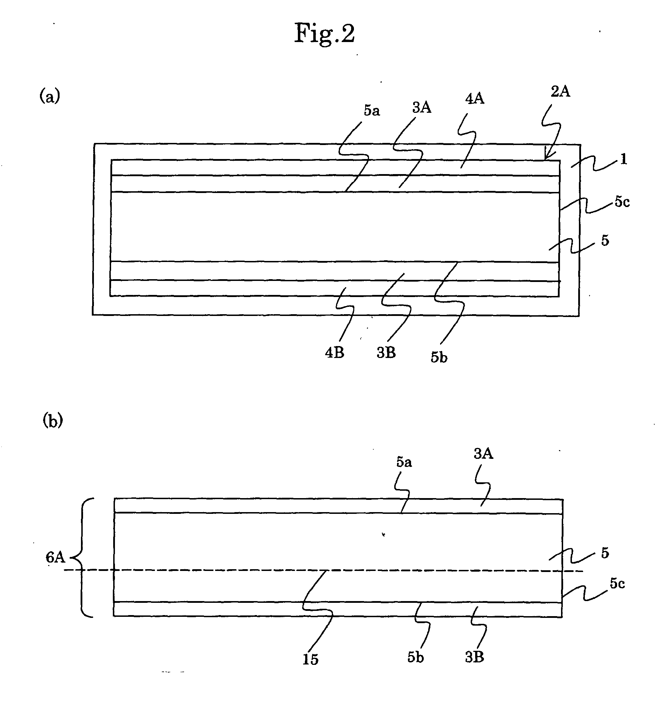

According to a preferred embodiment of the second aspect of the present invention, a plurality of green sheets for dense bodies are laminated onto a monolayer of the green body for porous body, and then subjected to cold isostatic pressing for press molding. For example, as shown in Figs. 2(a) and 2(b), green bodies 3A and 3B for dense bodies are laminated onto both main faces 5a and 5b of the green body 5 for porous body, while resin sheets 4A and 4B are further laminated, respectively. The outer surfaces of the resin sheets 4A and 4B and side face 5c of the green body 5 are covered with the film 1, and then subjected to cold isostatic pressing. The resin sheets 4A and 4B are then removed from the thus obtained pressure molded body to obtain a pressure molded body 6A shown in Fig. 2(b).

After the pressure molded body 6A is obtained, the green body 5 for porous body 5 is cut, as shown in a numeral 15, along a plane substantially parallel with the main faces 5a and 5b to obtain two pressure molded bodies 6 (see Fig. 1(b)). The pressure molded bodies 6 are then sintered to obtain laminated sintered bodies 7 shown in Fig. 1(c).

Alternatively, the pressure molded body 6A is sintered to obtain a laminated sintered body having one porous body 8 and two dense bodies 9. The laminated body is then cut to obtain two laminated sintered bodies 7 shown in Fig. 1(c).

In a preferred embodiment, when the green bodies are subjected to cold isostatic pressing, so called rubber press molding is applied (see "Fine ceramics: molding, processing and joining techniques" published by Kogyo chosakai publishing Co. Ltd. 1989, pages 14 to 15). According to the technique, granule or powder is filled in a rubber mold and a pressure is applied onto the rubber mold isostatically to press the granule or powder for molding. The technique includes dry and wet processes.

The green body for porous body may preferably be a molded body obtained by shaping a mixture of a main component for the porous body, an organic binder and a pore-forming agent. The organic binder includes polymethyl acrylate, nitro cellulose, polyvinyl alcohol, polyvinylbutyral, methyl cellulose, ethyl cellulose, starch, wax, an acrylic polymer, a methacrylic polymer, and the like. The amount of the organic binder may preferably be 0.5 to 5 weight parts, provided that the weight of the main component is 100 weight parts.

The green body for dense body may preferably be a molded body obtained by shaping a mixture of a main component for dense body, an organic binder and a solvent (water or organic solvent). The organic binder may be those described above. The amount of the organic binder may preferably be 0.5 to 20 weight parts, provided that the weight of the main component is 100 weight parts.

The green body for porous body may be shaped by any methods not particularly limited, and may be a known ceramic molding process such as doctor blade, dipping, extrusion, and metal mold pressing methods. The green body for dense body may be shaped by any methods not particularly limited, and may be a known ceramic molding process such as doctor blade, dipping and extrusion methods. Since it is important to make the thickness of the green body constant,- doctor blade and extrusion methods are most preferred for controlling the thickness in a specific range. When the green body is molded by doctor blade method, a plasticizer such as polyethylene glycol, polyalkylene glycol, dibutyl phthalate and the like, and a deflocculating agent such as glycerin, oleic acid, sorbitan triol or the like and a solvent such as toluene, ethanol, butanol or the like may preferably be used in addition to the above binder.

The thickness of the green body for dense body is not particularly limited, as far as the thickness of the dense body after the sintering can be controlled in a range of 25 $\mu$m or smaller.

Applications of the laminated sintered body according to the first and second aspects are not particularly limited. The application may preferably be a ceramic for use in electrochemical applications, particularly in an electrochemical cell.

According to the first, second and third aspects of the present invention, an electrochemical cell includes a solid oxide fuel cell, an oxygen pump and a high temperature vapor electrolysis cell. The high temperature vapor electrolysis cell can be used as a hydrogen production device, and also as a removing device of water vapor. In this case, the following reactions are caused at the respective electrodes.

$$\text{Anode: } H_2O + 2e^- \rightarrow H_2 + O^{2-}$$

$$\text{Cathode: } O^{2-} \rightarrow 2e^- + 1/2\ O_2$$

Further, the electrochemical cell can be used as a decomposition cell for $NO_X$ and/or $SO_X$. This Decomposition cell can be used as a purification device for exhaust gas from motor vehicles, power generation devices or the like. In this case, oxygen in the exhaust gas is removed through a solid electrolyte film while $NO_X$ is electrolyzed into nitrogen and oxygen, and the oxygen thus produced by this decomposition can be also removed. Further, by this process, vapor in the exhaust gas is electrolyzed to produce hydrogen and oxygen, and the produced hydrogen reduces $NO_X$ to $N_2$. Further, in a preferable embodiment, the electrochemical cell is a solid oxide fuel cell.

In a particularly preferred embodiment, the laminated sintered body of the first and second aspects is a laminated body of a solid electrolyte film (dense body) and an electrode (porous body). The electrode may be an anode or cathode.

The materials for a solid electrolyte layer may preferably be yttria-stabilized zirconia or yttria partially-stabilized zirconia, and includes the other materials. In the case of $NO_x$ decomposition cell, cerium oxide is also preferable.

The cathode material is preferably lanthanum-containing perovskite-type complex oxide, more preferably lanthanum manganite or lanthanum cobaltite, and most preferably lanthanum manganite. Into lanthanum manganite, strontium, calcium, chromium, cobalt, iron, nickel, aluminum or the like may be doped. Further, the cathode material may be palladium, platinum, ruthenium, platinum-zirconia cermet, palladium-zirconia cermet, ruthenium-zirconia cermet, platinum-cerium oxide cermet, palladium-cerium oxide cermet, and ruthenium-cerium oxide cermet.

As the anode materials, nickel, palladium, platinum, nickel-zirconia cermet, platinum-zirconia cermet, palladium-zirconia cermet, nickel- cerium oxide cermet, platinum-cerium oxide cermet, palladium- cerium oxide cermet, ruthenium, ruthenium-zirconia cermet and the like are preferable.

In a preferred embodiment, the laminated sintered body according to the first and second aspects of the present invention may be a laminated body of an interconnector (dense body) and an electrode (porous body). The material for the interconnector layer may preferably be a complex oxide of perovskite type containing lanthanum and more preferably be lanthanum chromite. The material for the porous body may be selected among the materials for anode and cathode listed above.

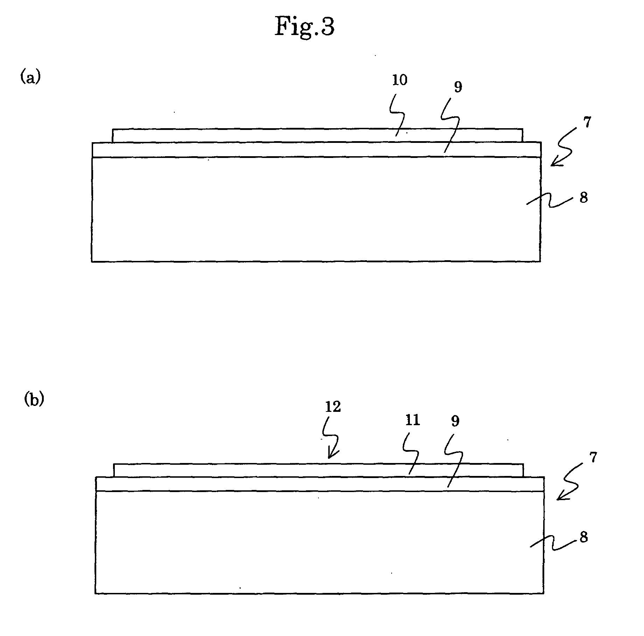

When an electrochemical cell is produced, a molded body 10 for the second electrode is provided on the surface of the solid electrolyte layer 9 of the laminted sintered body 7 as shown in Fig. 3 (a). The thus obtained molded body 10 is sintered to form the second electrode 11 to obtain an electrochemical cell 12 as shown in Fig. 3(b).

When the laminated body is subjected to cold isostatic pressing, the pressure may preferably be 500 kgf/cm$^2$ or higher and more preferably be 1000 kgf/cm$^2$ or higher, for improving the adhesion of the green bodies in the laminated body. The upper limit of the pressure may be practically 10 tf/cm$^2$.

When the pressure molded body is sintered, a dewaxing step may be performed before the sintering step. It is also possible to complete the dewaxing of the pressure molded body during a temperature ascending step for the sintering. The sintering temperature may normally be 1200 to 1700 °C in a pressure molded body for an electrochemical cell.

According to a preferred embodiment of the third aspect of the present invention, one gas is an oxidizing gas and the other gas is a reducing gas. In this case, the ceramic substrate is exposed to the oxidizing gas and the ceramic film is exposed to the reducing gas. Many materials are known having resistance against an oxidizing gas without resistance against a reducing gas. The material for the ceramic substrate may be selected among a wide range of known materials. A room for further reducing the internal resistance in the ceramic substrate is thus large.

In a preferred embodiment of the third aspect of the present invention, a conductive film is provided on the ceramic film to reduce the contact resistance of the conductive interconnector and electrochemical cell. In this embodiment, however, the conductive film may preferably contacted with the reducing gas. In this case, the ceramic substrate is exposed against the oxidizing gas. The conductive film includes a metal foil and film.

The first gas and second gas may be reducing and oxidizing gases, respectively. The first and second electrodes may be anode and cathode, respectively.

The material having resistance against an oxidizing gas at an operational temperature of the electrochemical cell means a material resistive against oxidation and corrosion against the oxidizing gas. Such material includes lanthanum manganite, lanthanum chromite and lanthanum cobaltite.

The material having resistance against a reducing gas at an operational temperature of the electrochemical cell means a material resistive against reduction and corrosion against the reducing gas. Such material includes lanthanum chromite.

The material for the conductive film includes an electronic conductive ceramic such as lanthanum manganite and lanthanum chromite, platinum, silver, nickel, a nickel based alloy such as inconel and nichrome, and an iron based alloy such as stainless steel.

The kinds of the oxidizing and reducing gases may differ depending on the kind of the electrochemical cell for use. The materials for the ceramic substrate and for ceramic film may be varied depending on the kind of the electrochemical cell, and particularly depending on the kinds of the oxidizing and reducing gases.

The-oxidizing gas is not particularly limited, as far as oxygen ions may be supplied to a solid electrolyte film from the gas. The gas includes air, oxygen, $NO_x$ and $SO_x$.

The reducing gas includes hydrogen, methane and carbon monooxide.

The thickness of the ceramic substrate is not particularly limited, and may preferably be 0.3 mm or larger, and more preferably be 0.5 mm or larger, for improving the structural strength of the conductive interconnector. The thickness may preferably be 10 mm or smaller, and more preferably be 5 mm or smaller, for reducing the internal resistance in the ceramic substrate.

According to the third aspect of the present invention, the thickness of the ceramic film is not particularly limited, as far as the air-tightness can be preserved against the first gas. If the first gas permeates through the ceramic film, the ceramic substrate may be deteriorated from the interface of the substrate and film. The thickness of the ceramic film may preferably be 5 μm or larger, and more preferably be 10 μm or larger, for improving the air-tightness of the ceramic film. Further, the thickness of the ceramic film may preferably be 50 μm or smaller, and more preferably be 25 μm or smaller, for reducing the internal resistance in the ceramic film.

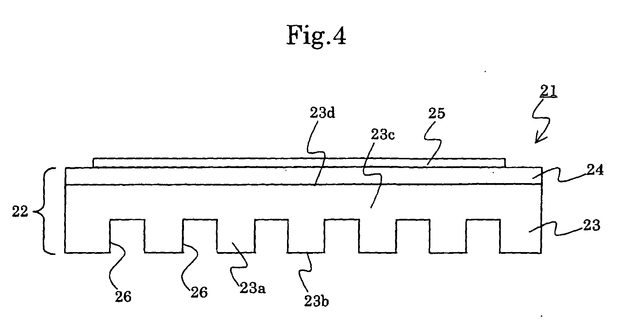

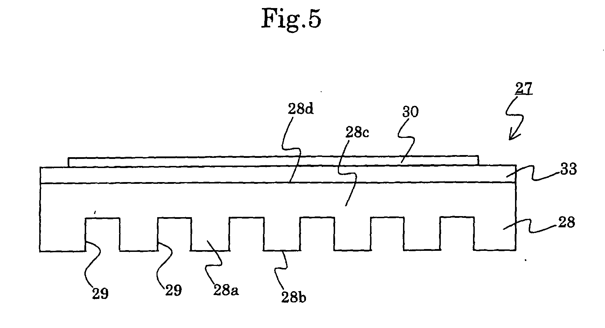

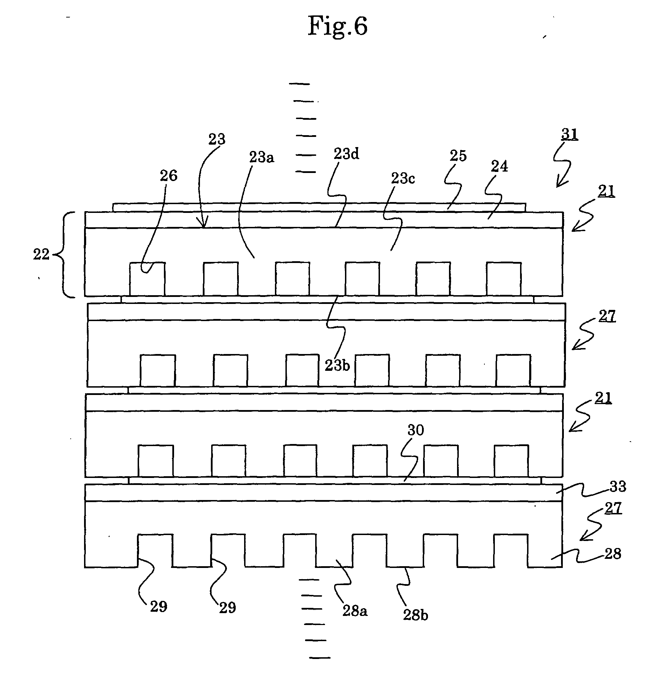

Fig. 4 is a front view schematically showing a conductive interconnector 21 according to one embodiment of the third aspect of the present invention. Fig. 5 is a front view schematically showing an electrochemical cell 27, and Fig. 6 is a front view showing essential parts of an electrochemical device 31 having a plurality of conductive interconnectors 21 and electrochemical cells 27.

As shown in Fig. 4, the conductive interconnector 21 has a ceramic conductor 22 and a conductive film 25. In the present example, the ceramic substrate 23 is exposed to the oxidizing gas, and the ceramic film 24 is exposed to the reducing gas. In a preferred embodiment, one ceramic substrate 23 made of lanthanum manganite and ceramic film 24 made of lanthanum chromite are molded as an integrated body by cold isostatic pressing and then sintered. The ceramic substrate 23 has a plate-shaped main part 23c, and a plurality of elongate protrusions 23a protruding from the main part 23c. A plurality of elongate grooves 26 each having a cross sectional shape of a rectangle are formed in the ceramic substrate 23. The adjacent grooves 26 are defined by the protrusions 23a. 23b represent the surface of protrusion 23a. A ceramic film 24 is formed on the main face 23d of the ceramic substrate 23. The conductive film 25 is provided on the film 24.

As shown in Fig. 5, the electrochemical cell 27 of the present example has a first electrode 30, a solid electrolyte film 33 and a second electrode 28. In a preferred embodiment, the second electrode 28 and solid electrolyte film 33 are shaped as an integrated body by cold isostatic pressing and then sintered. The second electrode 28 has a plate-shaped main part 28c, and a plurality of elongate protrusions 28a protruding from the main part 28c. The adjacent protrusions 28a are defined by the groove 29. 28b represents the surface of the protrusion 28a.

As shown in Fig. 6, a plurality of the electrochemical cells 27 and conductive interconnectors 21 are laminated in turns to produce a stack. In this case, the surface 23b of the ceramic substrate 23 on the groove side is opposed to and electrically connected with the electrode 30. The face of protrusion 28b of the electrode 28 is electrically connected with the conductive film 25 of the conductive interconnector 21. The groove 26 may function as a flow route for the oxidizing gas, and the groove 29 may function as a flow route for the reducing gas. Further, only two electrochemical cells 27 and two conductive interconnectors 21 are shown in Fig. 6, additional electrochemical cells and conductive interconnectors may be arrange on the upper and lower sides of the stack shown in Fig. 6.

The conductive interconnector 21, particularly ceramic conductor 22, may be made by any process not particularly limited, including the following methods.

(1) The ceramic substrate and film are sintered separately and then joined with each other using an inorganic adhesive.

(2) After the ceramic substrate is produced by sintering, the ceramic film is directly formed on the surface of the substrate. The film may be formed by wet and dry processes. In the case of the wet process, a ceramic slurry is applied on the surface by an application method such as dipping and spin coating and the thus formed film is then sintered. The dry process includes sputtering, chemical vapor deposition, physical vapor deposition, metal organic chemical vapor deposition and vapor deposition.

(3) Green bodies for the ceramic substrate and ceramic film are laminated and then sintered.

According to the third aspect of the present invention, the green bodies for ceramic substrate and ceramic film may preferably be green bodies obtained by shaping a mixture of ceramic powder, an organic binder and a solvent (optionally used). The organic binder includes polymethyl acrylate, nitro cellulose, polyvinyl alcohol, polyvinylbutyral, methyl cellulose, ethyl cellulose, starch, wax, an acrylic polymer, a methacrylic polymer, and the like. The amount of the organic binder may preferably be 0.5 to 20 weight parts, provided that the weight of the main component is 100 weight parts.

The ceramic conductor may be used as a conductive interconnector. When the conductive film 25 is joined with the ceramic conductor 22 as described above, a conductive adhesive may preferably be used for the adhesion. The conductive adhesive includes nickel paste. Further, the conductive film 25 may be formed with nickel plating.

EXAMPLES

(Experiment "A" according to the second aspect of the present invention)

(Production of a pressure molded body 6)

Alumina balls each having a diameter of 10 mm were contained in a container of nylon. 100 weight parts of 3 mole percent yttria stabilized zirconia, 20 weight parts of toluene, 11 weight parts of ethanol and 2 weight parts of butanol as solvents were added and mixed in a ball mill at a revolution speed of 60 rpm. After that, 8 weight parts of polyvinylbutyral, 3 weight parts of dibutyl phthalate, 26 weight parts of toluene and 15 weight parts of ethanol were added to the mixture, and further mixed in the ball mill. The thus obtained slurry was shaped as a sheet by doctor blade method on a sheet (thickness of 100 μm: resin sheet 4) of polyethylene terephthalate. The green sheet 3 for dense body having a width of 50 mm and thickness of 20 μm of 3 mole percent yttria stabilized zirconia (for a solid electrolyte film) was produced on the resin sheet 4.

Further, an organic binder and water were added to nickel oxide powder and 8 mole percent yttria stabilized zirconia powder, and then wet mixed in a ball mill to obtain a mixture, which was dried and granulated. The granulated powder was shaped in a metal mold to produce a green body 5 having a thickness of 3 mm (green body for fuel electrode).

The above obtained green body 3 for dense body and resin sheet 4 were laminated on the green body 5 so that the green bodies 3 and 5 contact each other. The thus obtained laminated body were covered with a contained of a film for vacuum packaging and subjected to cold isostatic pressing. (at a pressure of 2 ton/cm² and a holding time of 1 minute). The thus obtained pressure molded body was removed from a mold and the resin film 4 was removed to obtain a pressure molded body 6.

(Sintering of the pressure molded body 6)

The pressure molded body was sintered in air at a maximum temperature of 1400 °C for 2 hours to obtain a laminated sintered body 7.

(Production of air electrode)

100 weight parts of lanthanum manganite powder having an average diameter of 3 μm, 3 weight parts of polyvinyl alcohol modified with alkyl acetate, and 30 weight parts of terepineol were mixed in an alumina pot to produce paste. The thus obtained paste was applied using a screen printing system to from a layer 10 shown in Fig. 3(a). The layer 10 was dried and sintered at a maximum temperature of 1250 °C for 1 hour to form an air electrode.

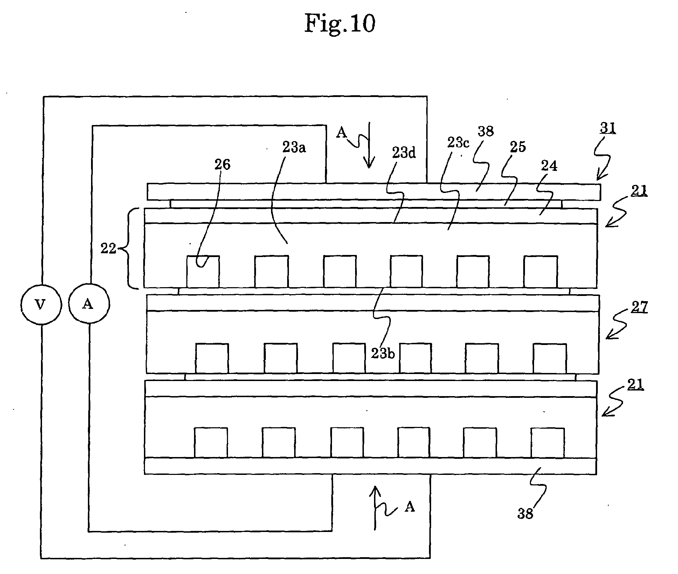

The thus obtained laminated sintered body 7 was observed at the polished surface using a scanning electron microscope (at a magnitude of 500), and the results were shown in Fig. 8. In Fig. 8, the fuel electrode 8 was shown in the lower side and the solid electrolyte film 9 was shown in the upper side. Pores and defects were not observed in the solid electrolyte film and the film thickness proved to be constant.

Fig. 9 shows a photograph taken by a scanning electron microscope (at a magnitude of 500) of the laminated sintered body whose solid electrolyte film 9 was formed by absorption dipping. As shown in Fig. 9, the fuel electrode 8 was shown in the lower side and the solid electrolyte film 9 was shown in the upper side. Micro pores and defects were observed in the solid electrolyte film.

(Experiment "B" according to the second aspect of the present invention)

Laminated sintered bodies of examples shown in tables 1 and 2 were produced according to the same procedure as the experiment "A". The width of the molded body was 150 mm and the thickness of the molded body was variously changed. Further, samples having diameters of φ 90 mm (area of 63.6 cm²), φ 50 mm (area of 19.6 cm²) and φ 16 mm (area of 2.0 cm²) were cut out from the laminated sintered bodies for measurement.

The helium leakage rate was measured by vacuum spraying method using a helium leakage detector (a mass analysis type helium leakage detector "MSE-11FA" supplied by Shimadzu) for each of the laminated sintered bodies of the examples. Each of the laminated sintered bodies was used to produce an SOFC according to the same procedure as the experiment "A". The initial generation output was measured for each SOFC. Specifically, the laminated sintered body was set in a system for testing generation. Platinum meshes were provided on the air and fuel electrodes, respectively, for collecting electric current. Air was flown in the side of the air electrode in a flow rate of 500 cc/min, and nitrogen was flown in the side of the fuel electrode in a flow rate of 500 cc/min, while the temperature was elevated. The temperature was then held at 800 °C and hydrogen was flown in the side of the fuel electrode in a flow rate of 500 cc/min to replace the nitrogen gas. After the atmosphere was stabilized, a voltage of 0.7 volt was applied and the output (initial output) was measured 10 hours later.

After that, an initiation and termination cycle test was performed. Specifically, after the initial output was measured, (1) current was terminated, and nitrogen was flown in the side of the fuel electrode at a flow rate of 500 cc/min for 14 hours, while the temperature was maintained at 800 °C. After that, (2) hydrogen was flown in the side of the fuel electrode at a flow rate of 500 cc/min to replace the gas. After the atmosphere was stabilized, a voltage of 0.7 volt was applied for 10 hours. The above steps (1) and (2) were repeated 10 times in each initiation and termination cycle test.

The output after one initiation and termination cycle test was measured, and the results were shown in the following tables.

Table 1

| | Comparative Example 1 | Comparative Example 2 | Example 1 | Example 2 | Example 3 |
|---|---|---|---|---|---|
| Thickness of porous body ($\mu$m) | 100 | 100 | 300 | 1000 | 1000 |
| Thickness of dense body ($\mu$m) | 50 | 50 | 25 | 10 | 10 |
| Area of solid electrolyte part of cell ($cm^2$/single cell) | 2 | 63.6 | 63.6 | 2 | 19.6 |
| Possibility of production of Laminated sintered body | possible | impossible | possible | possible | possible |
| Helium leakage rate ($\times 10^{-6}$ Pa $\cdot$ $m^3$/s) | 0.002 | - | 0.001 or lower | 0.002 | 0.03 |
| Generation test Initial output (W/$cm^2$) | 0.16 | - | 0.2 | 0.4 | 0.36 |
| Output after initiation and termination cycle test (W/$cm^2$) | - | - | 0.2 | - | - |

Table 2

| | Example 4 | Example 5 | Example 6 | Comparative Example 3 | Comparative Example 4 |
|---|---|---|---|---|---|
| Thickness of porous body ($\mu$m) | 1000 | 1000 | 300 | 1000 | 1000 |
| Thickness of dense body ($\mu$m) | 10 | 10 | 5 | 60 | 20 |
| Area of solid electrolyte part of cell ($cm^2$/ single cell) | 63.6 | 113 | 63.6 | 2 | 63.6 |
| Possibility of production of laminated sintered body | possible | possible | possible | possible | possible |
| Helium leakage rate ($\times 10^{-6}$ Pa$\cdot$$m^3$/s) | 0.08 | 0.25 | 0.9 | 0.36 | 1.5 |
| Generation test Initial output (W/$cm^2$) | 0.35 | 0.3 | 0.35 | 0.1 | 0.31 |
| Output after initiation and termination cycle test (W/$cm^2$) | 0.35 | - | - | - | 0.16 |

As can be seen from the results, the output after the initiation and termination cycle test can be maintained at a high value according to the second aspect of the present invention.

(Experiment "C" according to the third aspect of the present invention)

(Production of a conductive interconnector)

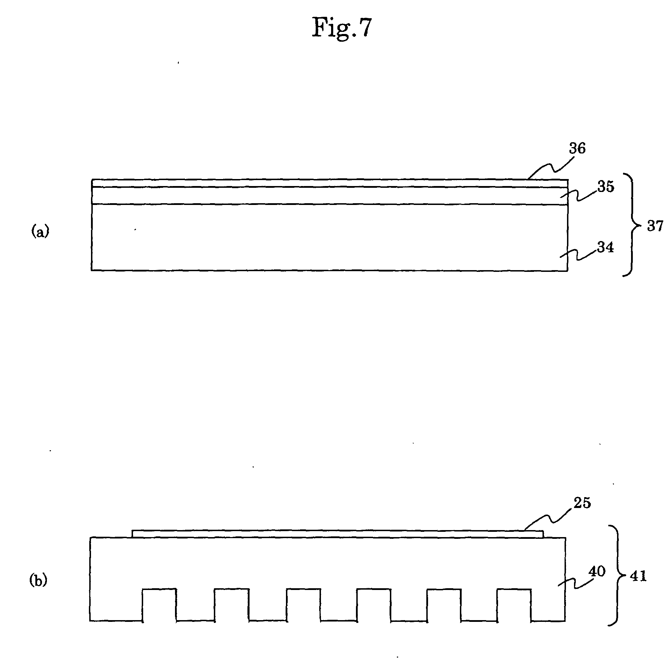

Alumina balls each having a diameter of 10 mm were contained in a container of nylon. 100 weight parts of lanthanum chromite powder, 20 weight parts of toluene, 10 weight parts of ethanol and 2 weight parts of butanol were added as solvents and mixed in a ball mill at a revolution speed of 60 rpm. After that, 8 weight parts of polyvinylbutyral, 3 weight parts of dibutyl phthalate, 27 weight parts of toluene and 15 weight parts of ethanol were added to the mixture, and further mixed in the ball mill. The thus obtained slurry was shaped as a sheet by doctor blade method to produce a green sheet 35 having a width of 50 mm and thickness of 20 $\mu$m of lanthanum chromite (see Fig. 7(a): green body for interconnector).

Further, 3 weight parts of an organic binder and water were added to 100 weight parts of lanthanum manganite powder, and then wet mixed in a ball mill to obtain a mixture. The mixture was dried with a spray drier and granulated. The granulated powder was shaped in a metal mold for pressure molding to produce a green body 34 having a thickness of 6 mm. The green body 34 and green sheet 35 were laminated and a film 36 made of polyethylene terephthalate (having a thickness of 100 $\mu$m) was laminated on the green sheet 35. The laminated body was contained in and covered with a container of a film for vacuum packaging, and then subjected to cold isostatic pressing (at a pressure of 2 ton/cm$^2$ and a holding time of 1 minute). The thus obtained pressure molded body was removed from the container, and the film container was peeled off to obtain a pressure molded body 37.

The pressure molded body 37 was sintered in air at a maximum temperature of 1600 $^{\circ}$C for 2 hours to obtain a laminated sintered body 27. The side of lanthanum manganite was processed by grinding to form grooves each having a width of 3 mm and depth of 3 mm to obtain a ceramic conductor 22 having a length of 50 mm, a width of 50 mm and thickness of 5 mm. A conductive film 25 of nickel was then formed on the ceramic conductor 22 by electroless plating to obtain a conductive interconnector 21.

(Production of a conductive interconnector according to a comparative example)

3 weight parts of an organic binder and water were added to 100 weight parts of lanthanum chromite powder, and then wet mixed in a ball mill to obtain a mixture. The mixture was dried with a spray drier and granulated. The granulated powder was shaped in a metal mold for pressure molding to produce a green body having a thickness of 6 mm. The green body was contained in and covered with a container of a film for vacuum packaging, and then subjected to cold isostatic pressing (at a pressure of 2 ton/cm$^2$ and holding time of 1 minute). The thus obtained pressure molded body was removed from the container, and the film container was peeled off to obtain a pressure molded body. The pressure molded body was sintered in air at a maximum temperature of 1600 $^{\circ}$C for 2 hours to obtain a laminated sintered body. The sintered body was processed by grinding to form grooves each having a width of 3 mm and a depth of 3 mm to obtain a ceramic conductor 40 (see Fig. 7(b)) having a length of 50 mm, a width of 50 mm and thickness of 5 mm. A conductive film 25 of nickel was then formed on the ceramic conductor 40 by electroless plating to obtain a conductive interconnector 41.

(Production of cell for solid oxide fuel cell)

(Production of substrate functioning as fuel electrode)

An organic binder and water were added to nickel oxide powder and 8 mole percent yttria stabilized zirconia powder, and then wet mixed in a ball mill to obtain a mixture. The mixture was then dried and granulated. The granulated powder was press molded in a metal mold to produce a green body having a length of 70 mm, width of 70 mm and thickness of 3 mm (green body for fuel cell.). The molded body was sintered at 1400 $^{\circ}$C for 2 hours. The sintered body was then processed by grinding to form grooves each having a width of 3 mm and depth of 3 mm to obtain a substrate functioning as a fuel electrode having a length of 50 mm, width of 50 mm and thickness of 5 mm.

(Production of solid electrolyte film)

8 mole percent yttria stabilized zirconia powder for spray drying having an average diameter of 20 $\mu$m was supplied into plasma flame of an output of 40 kW to form a solid electrolyte film having a thickness of 50 $\mu$m by plasma spraying on the substrate functioning as fuel electrode. After that, the solid electrolyte film was heat treated at 1350 $^{\circ}$C for 2 hours for densifying the film.

(Production of air electrode)

100 weight parts of lanthanum manganite powder having an average diameter of 3 µm, 3 weight parts of polyvinyl alcohol modified with alkyl acetate, and 30 weight parts of terepineol were mixed in an alumina pot to produce paste. The thus obtained paste was applied using a screen printing system to from a layer having a length of 40 mm, width of 40 mm and thickness of 30 µm shown in Fig. 3(a). The layer 10 was dried and sintered at a maximum temperature of 1250 °C for 1 hour to form an air electrode.

(Generation test)

The conductive interconnector and solid electrolyte fuel cell were assembled to provide a stack shown in Fig. 10. The stack was set in an electric furnace, and pressed vertically as arrows "A". Argon gas was flown in the reduction side and air was flown in the oxidation side, while the temperature was elevated to 1000°C. After the temperature reached 1000°C, argon gas was replaced with hydrogen gas in the reduction side. The current and voltage property was measured, while the flow rates of air and hydrogen were adjusted at 1 liter/min and 1 liter/min, respectively. An output of 0.1 W/cm$^2$ was obtained at the maximum. Fracture and corrosion were not observed in the conductive interconnector 21 to prove that the assemble was stable. Further, the above measurement was carried out except that the conductive interconnector 21 was replaced with the conductive interconnector 41 of the comparative example. It was proved that the maximum output was considerably reduced to 0.05 W/cm$^2$.

**Claims**

1. A laminated sintered body having a ceramic porous body having a thickness of 300 µm or larger and a ceramic dense body having a thickness of 25 µm or smaller, said laminated sintered body having a helium leakage rate of 10$^{-6}$Pa • m$^3$/s or lower.

2. The laminated sintered body of claim 1, having an area of 60 cm$^2$ or larger.

3. The laminated sintered body of claim 1 or 2, obtained by laminating green bodies for said porous body and said dense body to obtain a laminate, pressure molding said laminate by cold isostatic pressing to obtain a pressure molded body, and sintering said pressure molded body.

4. The laminated sintered body of any one of claims 1 to 3, for use in an electrochemical cell.

5. The laminated sintered body of claim 4, wherein said dense body is a solid electrolyte film, and said porous body is at least one of an anode and a cathode.

6. The laminated sintered body of claim 4, wherein said laminated sintered body is a conductive interconnector for electrically connecting a plurality of said electrochemical cells, said porous body is a ceramic substrate and said dense body is a ceramic film provided on said ceramic substrate.

7. An electrochemical cell comprising said laminated sintered body of any one of claims 1 to 6.

8. The electrochemical cell of claim 7, wherein said dense body is a solid electrolyte film and said porous body is at least one of an anode and a cathode.

9. A method of producing a laminated body having a ceramic porous body having a thickness of 300 µm or larger and a ceramic dense body having a thickness of 25 µm or smaller; said method comprising the steps of:

    laminating green bodies for said porous body and said dense body to obtain a laminate,
    subjecting said laminate to pressure molding by cold isostatic pressing to obtain a pressure molded body, and
    sintering said pressure molded body to obtain a laminated sintered body.

10. The method of claim 9, further comprising the step of laminating a resin sheet to said green body for said dense body before said laminate is subjected to pressure molding by cold isostatic pressing.

11. The method of claim 10, further comprising the step of removing said resin sheet from said pressure molded body before said pressure molded body is sintered.

12. The method of any one of claims 9 to 11, wherein said laminate is pressure molded by cold isostatic pressing without providing a joining agent between said green bodies for porous and dense bodies.

13. The method of any one of claims 9 to 12, wherein said laminate comprises one said green body for said porous body and a plurality of said green bodies for said dense bodies and subjected to pressure molding by cold isostatic pressing.

14. The method of any one of claims 9 to 13, wherein said pressure molding is carried out applying a dry rubber press method or wet rubber press method.

15. The method of any one of claims 9 to 14, wherein said ceramic laminated sintered body is in use for an electrochemical cell.

16. A ceramic laminated sintered body obtained by the method of any one of claims 9 to 15.

17. The laminated sintered body of claim 16, having a helium leakage rate of $10^{-6}$ Pa • m$^3$/s or lower.

18. An electrochemical cell comprising said ceramic laminated sintered body of claim 16 or 17, wherein said dense body is a solid electrolyte film and said porous body is at least one of an anode and a cathode.

19. A conductive interconnector for connecting a plurality of electrochemical cells, said cell having a first electrode contacting first gas, a second electrode contacting a second gas, and a solid electrolyte film provided between said first and second electrodes: said conductive interconnector comprising:

    a ceramic substrate made of a material having resistance against said first gas at an operational temperature of said electrochemical cell, and
    a ceramic film formed on said substrate and made of a material having resistance against said second gas at an operational temperature of said cell.

20. The interconnector of claim 19, wherein said first gas is an oxidizing gas and said second gas is a reducing gas.

21. The interconnector of claim 19 or 20, wherein said ceramic substrate comprises lanthanum manganite and said ceramic film comprises lanthanum chromite.

22. The interconnector of any one of claims 19 to 21, wherein said ceramic substrate comprises nickel-zirconia cermet and said ceramic film comprises lanthanum chromite.

23. The interconnector of any one of claims 19 to 22, comprising a conductive film on said ceramic film.

24. The interconnector of any one of claims 19 to 23, wherein said ceramic substrate comprises a groove formed therein for flowing said first gas.

25. The interconnector of any one of claims 19 to 24, wherein said ceramic substrate comprises a ceramic porous body having a thickness of 300 μm or larger and said ceramic film comprises a ceramic dense body having a thickness of 25 μm or smaller, and wherein said interconnector comprises a laminated sintered body of said ceramic porous body and said ceramic dense body, and said interconnector having a helium leakage rate of $10^{-6}$ Pa • m$^3$/s or lower.

26. An electrochemical device comprising a plurality of electrochemical cells and a conductive interconnector for connecting said cells, said cell having a first electrode contacting a first gas, a second electrode contacting a second gas, and a solid electrolyte film provided between said first and second electrodes: said conductive interconnector comprising:

    a ceramic substrate made of a material having resistance against said first gas at an operational temperature of said electrochemical cell, and
    a ceramic film formed on said substrate and made of a material having resistance against said second gas at an operational temperature of said cell.

27. The device of claim 26, wherein said first gas is an oxidizing gas and said second gas is a reducing gas.

28. The device of claim 26 or 27, wherein said ceramic substrate comprises lanthanum manganite and said ceramic film comprises lanthanum chromite.

29. The device of any one of claims 26 to 28, wherein said ceramic substrate comprises nickel-zirconia cermet and said ceramic film comprises lanthanum chromite.

30. The device of any one of claims 26 to 29, comprising a conductive film on said ceramic film.

31. The interconnector of any one of claims 26 to 30, wherein said ceramic substrate comprises a groove formed therein for flowing said first gas.

32. The device of any one of claims 26 to 31, wherein said ceramic substrate comprises a ceramic porous body having a thickness of 300 $\mu$m or larger and said ceramic film comprises a ceramic dense body having a thickness of 25 $\mu$m or smaller, and wherein said interconnector comprises a laminated sintered body of said ceramic porous body and said ceramic dense body, and said interconnector having a helium leakage rate of $10^{-6}$ Pa $\cdot$ m$^3$/s or lower.

## Fig.1

(a)

(b)

(c)

# Fig.2

(a)

(b)

# Fig.3

(a)

(b)

Fig.4

# Fig.5

27

28d

28c

30

33

28

29  29  28a

28b

# Fig.6

# Fig.7

(a)

36

35

37

34

(b)

25

40  41

Fig.10

## INTERNATIONAL SEARCH REPORT

| International application No. |
|---|
| PCT/JP02/09913 |

**A. CLASSIFICATION OF SUBJECT MATTER**
Int.Cl$^7$ C04B38/00, B32B18/00, B28B3/00, H01M8/02, 8/12

According to International Patent Classification (IPC) or to both national classification and IPC

**B. FIELDS SEARCHED**

Minimum documentation searched (classification system followed by classification symbols)
Int.Cl$^7$ C04B38/00, B32B18/00, B28B3/00, H01M8/02, 8/12

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 8-319181 A (NGK Insulators, Ltd.),<br>03 December, 1996 (03.12.96),<br>Page 2, column 1, line 1 to column 2, line 35; page 6, column 9, lines 8 to 19; column 10, lines 18 to 24<br>(Family: none) | 19-24,26-31<br>1-6,7-8,<br>9-15,16-17,<br>18,25,32 |
| A | JP 2002-170578 A (Nissan Motor Co., Ltd.),<br>14 June, 2002 (14.06.02),<br>Page 2, column 1, line 1 to page 4, column 5, line 5; page 6, column 10, lines 15 to 49<br>(Family: none) | 1-32 |
| A | JP 4-110007 A (Mitsubishi Materials Corp.),<br>10 April, 1992 (10.04.92),<br>Page 1, left column, line 5 to right column, last line<br>(Family: none) | 1-32 |

☐ Further documents are listed in the continuation of Box C.    ☐ See patent family annex.

| | |
|---|---|
| \* Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 October, 2002 (29.10.02) | 12 November, 2002 (12.11.02) |

| Name and mailing address of the ISA/<br>Japanese Patent Office | Authorized officer |
|---|---|
| Facsimile No. | Telephone No. |

Form PCT/ISA/210 (second sheet) (July 1998)